(19)

**Europäisches Patentamt**
**European Patent Office**
**Office européen des brevets**

(11) **EP 4 198 941 A1**

(12) **DEMANDE DE BREVET EUROPEEN**

(43) Date de publication:
**21.06.2023 Bulletin 2023/25**

(21) Numéro de dépôt: **22210319.4**

(22) Date de dépôt: **29.11.2022**

(51) Classification Internationale des Brevets (IPC):
**G08G 1/01** *(2006.01)*   **G06F 17/00** *(2019.01)*
**G06F 21/00** *(2013.01)*   **G06N 3/00** *(2023.01)*
**G08G 1/052** *(2006.01)*

(52) Classification Coopérative des Brevets (CPC):
**G08G 1/0112; G06N 3/00; G08G 1/0116;**
**G08G 1/0129; G08G 1/052**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **14.12.2021 FR 2113470**

(71) Demandeur: **IFP Energies nouvelles**
**92500 Rueil-Malmaison (FR)**

(72) Inventeurs:
- **LARAKI, Mohamed**
  **92852 RUEIL-MALMAISON CEDEX (FR)**
- **DE NUNZIO, Giovanni**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCEDE DE PREDICTION D'AU MOINS UN PROFIL DE LA VITESSE D'UN VEHICULE POUR UN DEPLACEMENT AU SEIN D'UN RESEAU ROUTIER**

(57) La présente invention concerne un procédé de prédiction d'au moins un profil de vitesse d'un véhicule pour un déplacement au sein d'un réseau routier entre un point de départ et un point d'arrivée (O/D). Pour ce procédé, on construit un modèle de vitesse de véhicule (MOD) au moyen de données macroscopiques du réseau routier (MACa) et de données de trajets réalisés (DTRa). On applique ensuite ce modèle sur une succession de brins routiers qui constitue un trajet (CHE), qui relie le point de départ et le point d'arrivée (O/D), avec une contrainte de continuité de vitesse, pour former un premier profil de vitesse de trajet. Puis on détermine le profil optimal de vitesse du véhicule ($v_{opt}$) du trajet par itération de l'étape précédente pour respecter une contrainte physique.

[Fig 1]

EP 4 198 941 A1

**Description**

**Domaine technique**

La présente invention concerne la prédiction de la vitesse d'un véhicule sur un réseau routier.

Selon l'Organisation Mondiale de la Santé (OMS), environ 18000 décès par jour sont attribuables à une mauvaise qualité de l'air, ce qui fait monter l'estimation à environ 6.5 millions de décès par an. La pollution atmosphérique représente également un fort enjeu financier : une commission d'enquête sénatoriale estime que le coût total de la pollution de l'air s'établit entre 68 et 97 milliards d'euros par an pour la France, dans une évaluation, rendue en juillet 2015, intégrant à la fois les dommages sanitaires de la pollution, mais également ses conséquences sur les bâtiments, les écosystèmes et l'agriculture. Le secteur des transports représente toujours l'une des sources les plus importantes de polluants, malgré les nombreuses mesures mises en place par les pouvoirs publics et les avancements technologiques dans le domaine. Les transports, tous modes confondus, sont responsables d'environ 50% des émissions globales d'oxydes d'azote (NOx) et environ 10% des émissions de particules PM2,5. Le transport routier seul représente une part considérable de cet apport dû aux transports, avec 58% des émissions de NOx et 73% des émissions de particules PM2,5. Ces émissions sont dues principalement à trois facteurs : les émissions à l'échappement, les émissions d'abrasion, les émissions d'évaporation. Si les poids lourds sont les principaux émetteurs de polluants, ce sont les véhicules particuliers, plus représentés dans les zones urbaines fortement peuplées, qui ont l'impact le plus élevé sur l'exposition des citoyens à une mauvaise qualité de l'air.

Les mesures mises en place au niveau local pour gérer l'utilisation des transports (comme une meilleure planification des transports et les mesures pour inciter le transfert modal), ainsi que le progressif renouvellement du parc automobile, ont contribué à limiter les émissions de gaz à l'échappement du transport routier dans les villes et les agglomérations urbaines. En effet, dans le monde, l'activité liée au transport routier a augmenté d'un quart au cours de la dernière décennie, alors que les émissions de NOx ont augmenté de 5% et les émissions de particules ont diminué de 6%. Malgré ces améliorations, les niveaux de pollution dépassent encore les seuils fixés par l'OMS dans de nombreuses villes.

De même, les outils actuels de monitoring de la qualité de l'air ne permettent pas d'isoler et estimer avec précision la part d'émissions en usage réel due au transport routier ainsi que leur localisation spatiale. En effet, l'estimation de la quantité de polluants émis est basée sur l'utilisation d'une méthode moyenne adaptée à de larges échelles, typiquement des segments de route de plusieurs kilomètres pour que le trajet puisse être considéré comme représentatif de l'ensemble des conditions de circulation, comme dans la méthodologie COPERT (de l'anglais « COmputer Program to calculate Emissions from Road Transports », pouvant être traduit par programme informatique de calcul des émissions des transports routiers).

Par conséquent, il s'avère difficile pour les villes de prendre les bonnes décisions en matière d'aménagement de l'infrastructure routière et de législation sans avoir à disposition des outils précis d'évaluation et de projection d'impact des mesures envisagées sur les émissions polluantes du transport routier et la qualité de l'air. Ces nouveaux outils devraient idéalement permettre d'évaluer l'impact des mesures sur des échelles temporelles et spatiales très fines (de l'ordre d'une minute, et de l'ordre de dix mètres). Aujourd'hui, les métropoles et les gestionnaires de route disposent d'outils de modélisation des déplacements pour planifier et simuler l'impact de mesures de régulation et de travaux futurs afin de réduire la congestion ou d'améliorer la qualité de l'air. Cependant, ces modèles sont très difficiles à mettre en place (besoin de données d'enquête de population très coûteuses, besoin d'un effort conséquent de calibration), à maintenir (la maintenance est déléguée aux bureaux d'études, il est donc difficile de faire évoluer l'outil rapidement), et à mettre à jour (les enquêtes de population sont menées tous les 5 à 10 ans).

Il existe donc un fort besoin de disposer d'outils de modélisation et de prédiction de comportements de conduite au sein d'un réseau de transport sans devoir utiliser en entrée des données trop coûteuses et difficiles à obtenir, comme par exemple les données « floating car data » (FCD), qui ne sont pas forcément disponibles sur l'ensemble des brins routier d'un réseau urbain.

Les émissions polluantes (chimiques et/ou sonores) sont liées à la vitesse de déplacement des véhicules sur la route. C'est pourquoi pour avoir de bonnes prévisions des quantités de polluants émis, il est important de prédire précisément la vitesse des véhicules sur la route, en prenant compte de la topologie de la route (pente, virage, signalisation routière, etc.) et des conditions de trafic.

De plus, la consommation du véhicule est également liée à la vitesse du véhicule, qu'il s'agisse d'une consommation de carburant ou de consommation électrique. C'est pourquoi, pour déterminer de manière précise la consommation d'un véhicule, il est important de prédire précisément la vitesse des véhicules sur la route, en prenant compte de la topologie de la route (pente, virage, signalisation routière, etc.) et des conditions de trafic.

La connaissance de la vitesse des véhicules a également un impact sur la sécurité routière.

**Technique antérieure**

Plusieurs méthodes ont été développées pour déterminer la vitesse des véhicules.

La méthode la plus répandue est la détermination d'une vitesse moyenne du véhicule. Cette méthode peut notamment se baser sur l'exploitation de mesures de trafic pour estimer une seule valeur de la vitesse moyenne par segment routier. Cette méthode ne permet pas d'obtenir une bonne précision de la vitesse, elle ne permet pas de prendre en compte l'impact de l'infrastructure routière, ni les différents styles de conduites, ni les différents comportements liés aux signalisations. En outre, cette méthode nécessite des mesures de trafic récentes. Pour la majorité des méthodes d'estimation des vitesses moyennes, il n'est pas possible d'estimer une vitesse pour un segment de route sans mesure de trafic. Par exemple, la demande de brevet CN109003453 décrit une méthode d'estimation de la vitesse moyenne.

Une autre méthode se base sur une estimation d'une vitesse statistique correspondant au percentile 85% au moyen de modèles statistiques. Cette méthode présente les mêmes inconvénients que la méthode précédemment décrite : manque de précision, pas de prise en compte de l'impact de l'infrastructure routière et de la congestion, ni des différents styles de conduites, ni des différents comportements liés aux signalisations, impossibilité de prédire une vitesse pour un segment de route sans mesure de trafic. Par exemple, le document Lamm, Ruediger, Basil Psarianos, and Theodor Mailaender. Highway design and traffic safety engineering handbook. 1999. décrit une telle méthode.

La méthode de reconstruction d'un cycle de conduite se base sur un historique de données de trajet réalisés, appelées données FCD (de l'anglais « floating car data »). Cette base de données est décomposée puis groupée selon des descripteurs macroscopiques, tels que le type de route. Ensuite, chaque segment de route est identifié comme appartenant à un groupe. Un ou plusieurs profils de vitesse sont construits sur ce segment en combinant des portions de vitesses réelles issues des données FCD appartenant à ce groupe. Cette méthode manque également de précision ; en effet, les modèles utilisés sont pertinents à grande échelle spatiale uniquement, mais peuvent donner lieu à des comportements incohérents. De plus, cette méthode, qui peut être coûteuse en temps de calcul, ne permet pas de prendre en compte, directement et de manière détaillée, l'impact de l'infrastructure routière. Par exemple, le document Effa, R. C., L. C. Larsen. 1993. Development of Real-World Driving Cycles for Estimating Facility-Specific Emissions from Light-Duty Vehicles. Presented at Air and Waste Management Assoc. Specialty Conf. Emission Inventory: Perception and Reality, Pasadena, CA décrit une telle méthode.

Une autre méthode se base sur le calcul d'un profil de vitesse en fonction de la distance au moyen de fonctions mathématiques en considérant la signalisation et l'infrastructure sur chaque segment de route. Cette méthode ne donne pas satisfaction en termes de prise en compte des différents comportements et styles de conduite, ni de la topologie de la route. De plus, la majorité des procédés basée sur cette méthode ne peut pas être utilisée pour un segment de route pour lequel il n'existe pas d'historique. Le document Andrieu, C. (2013). Modélisation fonctionnelle de profils de vitesse en lien avec l'infrastructure et méthodologie de construction d'un profil agrégé (Doctoral dissertation, Université Paul Sabatier-Toulouse III) décrit une telle méthode.

Il existe en outre une méthode de classification de profils de vitesse en se basant sur des descripteurs microscopiques liés aux profils de vitesse, un ou plusieurs profils typiques sont ensuite associés à chaque segment de route. Cette méthode manque également de précision (la reconstruction se base uniquement sur une moyenne des données historiques), ne permet pas de prendre en compte les conditions de trafic (congestion) ni la topologie de la route, et manque d'exploitabilité car elle nécessite des données microscopiques pas toujours connues. Cette méthode est notamment décrite dans le document Laureshyn, Aliaksei, Kalle Åström, and Karin Brundell-Freij. "From speed profile data to analysis of behaviour: classification by pattern recognition techniques." IATSS research 33.2 (2009): 88-98.

La demande de brevet FR 3096822 (WO2020/239503) décrit une méthode de prédiction d'un profil de vitesse d'un véhicule. Cette méthode construit un modèle de vitesse de véhicule au moyen de données macroscopiques du réseau routier et de données de trajets réalisés. Puis, ce modèle est appliqué à un brin routier considéré. Bien que la méthode décrite dans cette demande de brevet donne satisfaction à l'échelle du brin routier, elle reste difficilement adaptable pour un trajet complet. En effet, cette méthode ne permet pas une cohérence temporelle et une cohérence des vitesses entre les brins. En effet, dans cette invention, les profils de vitesse sont construits à l'échelle d'un segment routier indépendamment des segments routiers environnants. Aucune continuité spatiale n'est donc assurée sur une succession de segments routiers connectés, ce qui ne permet une prédiction d'un profil de vitesse précis pour un déplacement entier.

## Résumé de l'invention

La présente invention a pour but de prédire, pour un trajet complet, un profil de vitesse précis à l'échelle spatiale fine en considérant les différents comportements et styles de conduites sans données microscopiques. Dans ce but, l'invention concerne un procédé de prédiction d'au moins un profil de vitesse d'un véhicule pour un déplacement au sein d'un réseau routier entre un point de départ et un point d'arrivée. Pour ce procédé, on construit un modèle de vitesse de véhicule au moyen de données macroscopiques du réseau routier et de données de trajets réalisés. On applique ensuite ce modèle sur une succession de brins routiers qui constitue un trajet, qui relie le point de départ et le point d'arrivée, avec une contrainte de continuité de vitesse, pour former un premier profil de vitesse de trajet. Puis on détermine le profil optimal de vitesse du véhicule du trajet par itération de l'étape précédente pour respecter une contrainte physique. Le modèle de profil de vitesse obtenu à partir de données macroscopiques et de données de trajets réalisés permet une bonne représentativité du modèle, et par conséquent, permet de prédire précisément un profil de vitesse. De plus, grâce à la prise en compte de la continuité des vitesses, et grâce à l'optimisation itérative sous contrainte, on peut déterminer de manière précise un profil de vitesse pour un trajet complet.

L'invention concerne en outre un procédé de prédiction de quantité de polluants chimiques et/ou sonores émis par un véhicule, ainsi qu'un procédé de prédiction d'une consommation d'un véhicule.

L'invention concerne un procédé de prédiction d'au moins un profil de vitesse d'un véhicule pour un déplacement au sein d'un réseau routier entre un point de départ et un point d'arrivée, ledit profil de vitesse étant une variation de la vitesse dudit véhicule le long dudit déplacement. Pour ce procédé, on met en oeuvre les étapes suivantes :

> a. On construit une base d'apprentissage à partir de données macroscopiques d'un réseau routier d'apprentissage, et de données de trajets réalisés sur ledit réseau routier d'apprentissage ;
> b. On construit un modèle de vitesse de véhicule au moyen d'une méthode d'apprentissage automatique entraînée sur ladite base d'apprentissage construite, ledit modèle de vitesse de véhicule associe à un brin dudit réseau routier une pluralité de profils de vitesse du véhicule en fonction desdites données macroscopiques dudit brin routier ;
> c. On acquiert un trajet reliant ledit point de départ et ledit point d'arrivée, ledit trajet étant formé d'une succession de brins routier dudit réseau routier considéré ;
> d. Pour chaque brin routier dudit trajet acquis, on détermine un profil de vitesse au moyen dudit modèle de vitesse de véhicule, et de données macroscopiques dudit brin routier en imposant que la vitesse initiale de véhicule d'un brin routier corresponde à la vitesse finale dudit brin routier précédent dans ladite succession des brins routiers du trajet acquis, et on construit un premier profil de vitesse dudit déplacement par agrégation des profils de vitesse de véhicule de chaque brin routier dudit trajet acquis ; et
> e. On identifie au moins une contrainte physique dudit trajet acquis, et tant que ladite contrainte physique dudit trajet acquis n'est pas respectée, on réitère l'étape précédente en générant un nouveau profil de vitesse de véhicule pour au moins un brin routier dudit trajet acquis, afin de générer un profil optimal de vitesse d'un véhicule pour ledit déplacement entre ledit point de départ et ledit point d'arrivée.

Selon un mode de réalisation, ladite contrainte physique est une contrainte temporelle d'un instant d'arrivée dudit trajet, et/ou une contrainte de vitesse du véhicule d'au moins une position dudit trajet, ladite contrainte temporelle et/ou ladite contrainte de vitesse étant notamment obtenue par un algorithme de plus court chemin et/ou par des données de trajet réalisé, de préférence ladite contrainte physique est déterminée en fonction d'un instant de départ.

Conformément à une mise en oeuvre, on construit ledit modèle de vitesse de véhicule en mettant en oeuvre les étapes suivantes :

> i) On segmente ledit réseau routier d'apprentissage au moyen desdites données macroscopiques dudit réseau routier ;
> ii) On catégorise chaque segment dudit réseau routier d'apprentissage en fonction desdites données macroscopiques dudit réseau routier, notamment par un algorithme de classification, tel qu'un réseau de neurones ;
> iii) Pour chaque catégorie de segment routier, on classifie lesdites données de trajets réalisés ; et
> iv) Pour chaque catégorie de segment routier et pour chaque classification desdites données de trajets réalisés, on génère au moins un profil de vitesse de véhicule au moyen desdites données de trajets réalisés.

Selon un aspect, on détermine au moins un profil de vitesse de véhicule sur chaque brin routier dudit trajet acquis en mettant en oeuvre les étapes suivantes :

> i. On segmente une portion du réseau routier qui comporte chaque brin routier dudit trajet acquis ;
> ii. On catégorise lesdits segments de ladite portion dudit réseau routier, notamment par un algorithme de classification, tel qu'un réseau de neurones ; et
> iii. On attribue à chaque segment de ladite portion dudit réseau routier ledit au moins un profil de vitesse de véhicule généré au moyen du modèle de vitesse du véhicule.

Avantageusement, on attribue également à chaque segment de ladite portion dudit réseau routier une distribution dudit au moins un profil de vitesse.

De préférence, à chaque itération de la détermination du profil de vitesse du trajet, on détermine un profil de vitesse d'un brin routier en construisant un profil de vitesse du brin routier au moyen d'une approche stochastique, ou au moyen d'une approche déterministe, notamment au moyen des fonctions paramétriques.

De manière avantageuse, on segmente ledit réseau routier par une division dudit réseau routier en triplets de liaisons, chaque triplet de liaisons étant formé par un brin routier formé entre deux noeuds dudit réseau routier, son origine et sa destination.

Selon une option de réalisation on acquiert ledit trajet reliant ledit point de départ et ledit point d'arrivée par un algorithme de plus court chemin, de préférence ledit algorithme de plus court chemin prend en compte en outre un instant de départ.

Conformément à un mode de réalisation, on affiche ledit au moins un profil de vitesse du véhicule de ladite portion de réseau routier sur une carte routière, de préférence au moyen d'un téléphone intelligent ou d'un système informatique.

De plus, l'invention concerne un procédé de prédiction d'une quantité d'au moins un polluant chimique et/ou sonore émis par un véhicule lors d'un déplacement au sein d'un réseau routier entre un point de départ et un point d'arrivée. Pour ce procédé, on met en oeuvre les étapes suivantes :

a. On prédit au moins un profil de vitesse du véhicule pour ledit déplacement entre ledit point de départ et ledit point d'arrivée au moyen du procédé de détermination d'au moins un profil de vitesse selon l'une des caractéristiques précédentes ; et
b. On applique un modèle microscopique d'émissions polluantes chimiques et/ou sonores audit au moins un profil de vitesse pour prédire une quantité d'au moins un polluant chimique et/ou sonore, ledit modèle microscopique reliant la vitesse du véhicule et la quantité d'au moins un polluant chimique et/ou sonore émis par un véhicule.

En outre, l'invention concerne un procédé de prédiction d'une consommation énergétique d'un véhicule au sein d'un réseau routier lors d'un déplacement entre un point de départ et un point d'arrivée. Pour ce procédé, on met en oeuvre les étapes suivantes :

a. On prédit au moins un profil de vitesse du véhicule pour ledit déplacement entre ledit point de départ et ledit point d'arrivée au moyen du procédé de détermination d'au moins un profil de vitesse selon l'une des caractéristiques précédentes ; et
b. On applique un modèle de consommation énergétique du véhicule audit au moins un profil de vitesse pour prédire une consommation énergétique dudit véhicule, ledit modèle reliant la vitesse du véhicule et ladite consommation dudit véhicule.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 illustre les étapes du procédé selon un premier mode de réalisation de l'invention.

La figure 2 illustre les étapes du procédé selon un deuxième mode de réalisation de l'invention.

La figure 3 illustre les étapes du procédé selon un troisième mode de réalisation de l'invention.

La figure 4 illustre les étapes de la construction du modèle de vitesse selon un mode de réalisation de l'invention.

La figure 5 illustre la prédiction d'un profil de vitesse selon un mode de réalisation de l'invention.

La figure 6 illustre une portion d'un réseau routier.

La figure 7 illustre une portion d'un réseau routier et des profils de vitesse associés.

La figure 8 illustre des profils de vitesse prédits au moyen du procédé selon l'invention avec une approche déterministe sur un segment de route avec arrêt.

La figure 9 illustre des profils de vitesse prédits au moyen du procédé selon l'invention avec une approche stochastique sur le même segment de route avec arrêt que la figure 8.

La figure 10 illustre, pour un premier exemple, une comparaison d'un profil de vitesse prédit au moyen du procédé selon l'invention et un profil de vitesse mesuré.

La figure 11 illustre, pour un deuxième exemple, une comparaison d'un profil de vitesse prédit au moyen du procédé selon l'invention et un profil de vitesse mesuré.

La figure 12 illustre, pour un exemple, une comparaison des temps de parcours, des émissions de NOx et des émissions de $CO_2$ obtenus par deux méthodes selon l'art antérieur et par le procédé selon l'invention.

**Description des modes de réalisation**

La présente invention concerne un procédé de prédiction d'au moins un profil de vitesse d'un véhicule pour un déplacement au sein d'un réseau routier, entre un point de départ et un point d'arrivée. Le procédé permet de prédire la vitesse d'un véhicule qui se déplace au sein d'un réseau routier entre un point de départ et un point d'arrivée, la vitesse peut être exprimée en fonction de la distance par rapport au point de départ. Etant donné qu'il s'agit d'une prédiction, celle-ci peut être réalisée même sur un réseau routier pour lequel aucun trajet antérieur n'est disponible. On appelle profil de vitesse, la variation de la vitesse du véhicule le long d'une route d'un réseau routier, le réseau routier étant constitué de l'ensemble des routes pour un territoire donné, par exemple pour un pays, pour une région, pour un département, pour une communauté de communes, etc. Autrement dit, le procédé selon l'invention prédit un profil de vitesse sur l'ensemble d'un déplacement permettant de rejoindre le point d'arrivée depuis le point de départ.

Un brin du réseau routier est une subdivision élémentaire du réseau routier entre deux noeuds consécutifs du réseau routier. Par exemple un brin du réseau routier peut être une route entre deux intersections consécutives, entre deux signalisations consécutives, entre une intersection et une signalisation, ou une partie d'autoroute entre deux sorties consécutives, etc. Ainsi, on dispose d'un découpage fin du réseau routier, et d'un modèle qui est adapté au réseau routier sans données microscopiques.

Le réseau routier peut être représenté par un graphe, appelé graphe routier. Le graphe routier est composé d'un ensemble d'arêtes (appelés aussi arcs) et de noeuds, les noeuds pouvant représenter les intersections, et les arêtes les portions de routes entre les intersections. Le graphe routier peut être obtenu à partir d'un service en ligne (« webservice ») de cartographie, par exemple Here ™ (Here Apps LLC, Pays-Bas) qui fournit les arêtes du graphe sous forme d'objets géométriques purs. De préférence, le graphe routier est cohérent avec le réseau routier (toutes les connexions physiques entre deux routes, et uniquement celles-ci, sont représentées par les noeuds du graphe), aussi invariant que possible dans le temps. De plus, le graphe routier peut être simplifié, en ne prenant pas en compte les portions de routes telles que les impasses, les chemins dans les parcs ou les pistes cyclables, en fonction du type du véhicule considéré (par exemple pour le mode de réalisation des véhicules automobiles, les pistes cyclables peuvent ne pas être prises en compte).

Le point de départ et le point d'arrivée appartiennent au réseau routier. Selon une mise en oeuvre de l'invention, le point de départ peut être une position actuelle du véhicule, cette position actuelle, peut être mesurée, notamment au moyen d'un dispositif de géolocalisation, un téléphone intelligent, etc. Le point d'arrivée peut être la destination du véhicule, par exemple celle indiquée dans un système de guidage de la conduite, souvent inclus dans un système de géolocalisation. Alternativement, le point de départ et le point d'arrivée peuvent être obtenus par d'autres moyens, et peuvent correspondre à un point de départ et un point d'arrivée pour un trajet futur.

De préférence, le véhicule est un véhicule motorisé circulant au sein du réseau routier, tel qu'un véhicule automobile, un deux-roues, un poids lourd, un car, un bus.

Dans la suite de la demande, le réseau routier auquel on applique les étapes 4 et 5 (définies ultérieurement dans la description) est appelé « réseau routier considéré ». Il pourrait être également appelé « premier réseau routier », il s'agit du réseau routier pour lequel on souhaite déterminer le profil de vitesse sur le déplacement. Ces notations permettent de le distinguer du « réseau routier d'apprentissage », qui sert pour la construction de la base d'apprentissage. Le « réseau routier considéré » peut correspondre ou peut inclure le « réseau routier d'apprentissage », ou être un réseau routier différent du « réseau routier d'apprentissage ».

Selon l'invention, on met en oeuvre les étapes suivantes :

1. Construction d'une base d'apprentissage

2. Construction d'un modèle de vitesse du véhicule

3. Acquisition d'un trajet

4. Détermination d'un premier profil de vitesse

5. Détermination d'un profil de vitesse optimal

Ces étapes peuvent être mises en oeuvre par des moyens informatiques, notamment un ordinateur et/ou un serveur. Les étapes 1 et 2 peuvent être réalisées hors ligne une seule fois, et les étapes 3 à 5 peuvent être réalisées en ligne, et ces étapes 3 à 5 peuvent être répétées pour différents points de départ et différents points d'arrivée. Ces étapes sont détaillées dans la suite de la description.

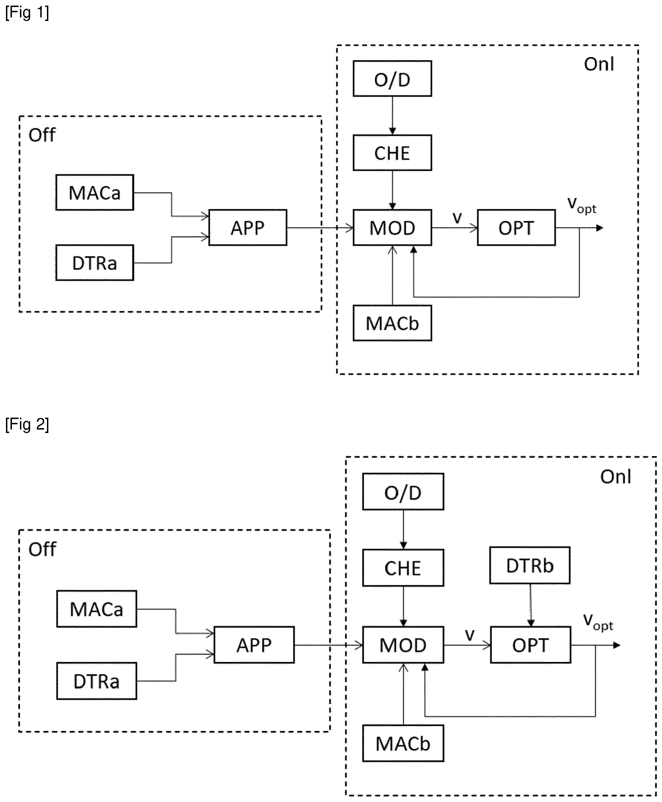

La figure 1 illustre, schématiquement et de manière non limitative, les étapes du procédé selon un premier mode de réalisation de l'invention. Au moyen de données macroscopiques (MACa) d'un réseau routier d'apprentissage, et de données de trajet réalisés (DTRa) du réseau routier d'apprentissage constituant une base d'apprentissage, on entraine une méthode d'apprentissage (APP) et on détermine le modèle de vitesse de véhicule (MOD). Ces premières étapes sont réalisées hors ligne (Off). En ligne (Onl), on applique le modèle de vitesse de véhicule (MOD) à des données macroscopiques (MACb) du réseau routier considéré, et à un trajet acquis (CHE) déterminée entre le point de départ et le point d'arrivée (O/D) du déplacement. Ainsi, on détermine un premier profil de vitesse du déplacement v. Puis, au moyen d'une optimisation (OPT) et d'une éventuelle réitération de l'application du modèle (MOD) on détermine un profil de vitesse du déplacement $v_{opt}$.

L'étape d'optimisation (OPT) est réalisée en fonction d'une contrainte physique : si la contrainte physique n'est pas respectée, on réitère l'étape d'application du modèle (MOD). Ainsi, le procédé peut comporter une boucle fermée. Cette étape d'optimisation permet de rendre plus réaliste le profil de vitesse optimal.

Selon un deuxième mode de réalisation de l'invention, la contrainte physique peut être obtenue au moyen de données de trajets réalisés sur le réseau routier considéré. La figure 2 illustre, schématiquement et de manière non limitative, ce deuxième mode de réalisation. Les étapes identiques à celles du premier mode de réalisation ne sont pas décrites à nouveau. Pour ce mode de réalisation, l'étape d'optimisation (OPT) dépend de données de trajets réalisés (DTRb) sur le réseau routier considéré.

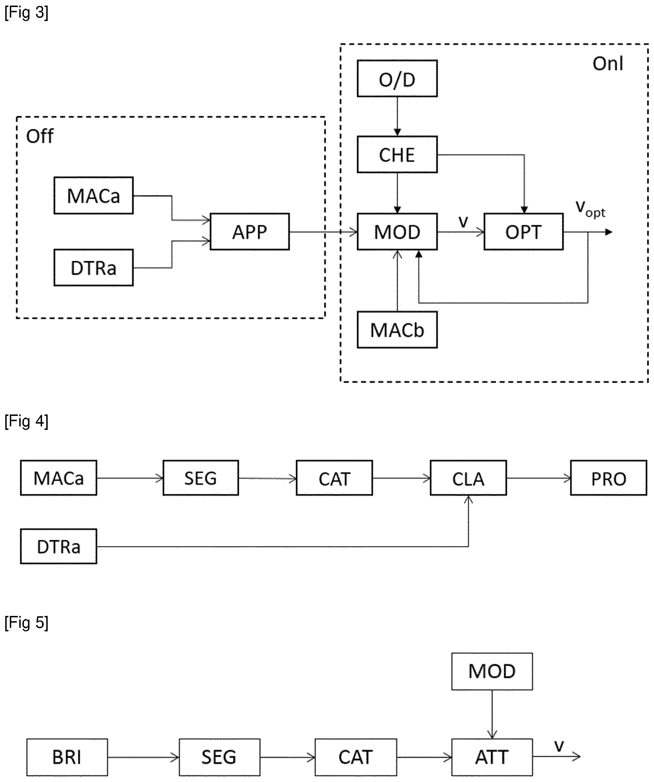

Selon un troisième mode de réalisation de l'invention (qui peut être combiné au deuxième mode de réalisation de l'invention), la contrainte physique peut être obtenue en fonction du trajet acquis. La figure 3 illustre, schématiquement et de manière non limitative, ce troisième mode de réalisation. Les étapes identiques à celles du premier mode de réalisation ne sont pas décrites à nouveau. Pour ce mode de réalisation, l'étape d'optimisation (OPT) dépend du trajet acquis (CHE) entre le point de départ et le point d'arrivée (O/D).

## 1. Construction de la base d'apprentissage

Lors de cette étape, on construit une base d'apprentissage pour un réseau routier d'apprentissage. Le réseau routier d'apprentissage est un réseau routier pour lequel on connaît certaines caractéristiques pour la construction du modèle de vitesse du véhicule. Le réseau routier d'apprentissage peut être différent ou identique du réseau routier considéré pour les étapes 4 et 5. En effet, l'invention permet de déterminer les profils de vitesse pour un autre réseau routier que celui qu'on utilise pour construire le modèle.

On construit la base d'apprentissage à partir d'au moins de données macroscopiques d'un réseau routier d'apprentissage et à partir de données de trajets réalisés au sein du réseau routier d'apprentissage. Les données macroscopiques du réseau routier d'apprentissage correspondent aux informations liées au réseau routier, telle que l'infrastructure, la pente, la signalisation, etc. Les données de trajets réalisés permettent de prendre en compte des comportements réels afin de former un modèle de vitesse du véhicule représentatif et précis.

Selon un aspect de l'invention, les données macroscopiques du réseau routier peuvent être la topologie (c'est-à-dire la pente, les virages, les intersections, la signalisation, etc.), le type de brin routier (par exemple route urbaine, autoroute, etc.), le nombre de voies du brin routier, la vitesse maximale du brin routier, la signalisation du brin routier, la pente du brin routier, la longueur du brin routier, etc. Préférentiellement, les données macroscopiques comprennent au moins le type de brin routier, le nombre de voies du brin routier, la vitesse maximale et moyenne du brin routier, la présence de signalisation, la longueur du brin routier, et la vitesse du trafic routier. De préférence, les données macroscopiques du réseau routier peuvent être fournies par un système d'information géographique (SIG). Here ™, Google Maps ™, OpenStreetMap ™ sont des exemples de système d'information géographique. Les données macroscopiques sont toujours disponibles et depuis n'importe quel lieu. Ainsi, elles peuvent servir comme entrées uniques de la première base d'apprentissage et du modèle de vitesse du véhicule.

Selon un aspect de l'invention, les données de trajets réalisés peuvent comporter des données mesurées lors de trajets antérieurs sur le réseau routier d'apprentissage, notamment la vitesse, la position et l'altitude. De préférence, les données de trajets réalisés peuvent être mesurées au moyen d'un système de géolocalisation, tel qu'un capteur de positionnement par satellite, tel que le système GPS (de l'anglais Global Positioning System), le système Galileo, etc. Le système de géolocalisation peut être embarqué à bord du véhicule ou déporté (par exemple au moyen d'un téléphone intelligent, de l'anglais « smartphone »).

## 2) Construction d'un modèle de vitesse

Lors de cette étape, on construit un modèle de vitesse de véhicule qui associe à un brin routier au moins un (de préférence une pluralité de) profil de vitesse en fonction de données macroscopiques du brin routier. En d'autres termes, le modèle de vitesse de véhicule permet de déterminer au moins un profil de vitesse sur un brin d'un réseau routier ; le modèle de vitesse de véhicule est dépendant des données macroscopiques du brin routier. Lors de cette étape on modélise le profil de vitesse à l'échelle d'un brin routier, alors que lors des étapes 4 et 5, le profil de vitesse est déterminé à l'échelle d'un trajet constitué d'une succession de brins routiers.

Lors de cette étape, on construit le modèle de vitesse de véhicule par une première méthode d'apprentissage automatique (de l'anglais « machine learning ») entraînée au moyen de la base d'apprentissage construite telle que décrite ci-dessus, comprenant au moins des données macroscopiques du réseau routier d'apprentissage et des données de trajets réalisés au sein du réseau routier d'apprentissage. Le modèle de profil de vitesse obtenu à partir de données macroscopiques et de données de trajets réalisés permet une bonne représentativité du modèle, et par conséquent, permet de prédire précisément un profil de vitesse.

Selon un mode de réalisation de l'invention, on peut construire le modèle de vitesse du véhicule en mettant en oeuvre les étapes suivantes :

2.1 Segmentation du réseau routier

2.2 Catégorisation des segments du réseau routier

2.3 Classification des données de trajets réalisés

2.4 Génération d'au moins un profil de vitesse.

Ces étapes peuvent être mises en oeuvre par des moyens informatiques. Ces étapes sont détaillées dans la suite de la description.

La figure 4 illustre, schématiquement et de manière non limitative, les étapes de la construction du modèle de vitesse du véhicule selon ce mode de réalisation de l'invention. Dans un premier temps, on segmente (SEG) le réseau routier au moyen des données macroscopiques (MACa) du réseau routier d'apprentissage. Par la suite, on catégorise (CAT) les segments du réseau routier obtenus à l'étape précédente. L'étape suivante est une étape de classification (CLA) des données de trajets réalisés (DTRa) du réseau routier d'apprentissage pour chaque catégorie (CAT) de segment routier. Enfin, on génère au moins un profil de vitesse (PRO) pour chaque segment du réseau routier d'apprentissage et pour chaque classification des données de trajets réalisés.

2.1 Segmentation du réseau routier

Lors de cette étape, on segmente le réseau routier d'apprentissage au moyen des données macroscopiques du réseau routier d'apprentissage. En d'autres termes, on découpe le réseau routier d'apprentissage en segments à partir des données macroscopiques du réseau routier d'apprentissage. Le but de cette étape est d'obtenir des subdivisions du réseau routier en fonction de données telles que la topologie et les conditions de trafic.

Conformément à une mise en oeuvre de l'invention, on peut segmenter le réseau routier par un découpage du réseau routier en triplets de liaisons (encore appelés triplet de brins routiers), chaque triplet de liaisons comportant une liaison formée entre deux noeuds du réseau routier, son origine et sa destination. Il existe une importante dispersion des vitesses enregistrées dans les données des trajets réalisés en fonction du style de conduite, de l'état de la signalisation, des manoeuvres et des origines et destinations de chaque véhicule. Cette segmentation en triplet de liaisons permet de limiter cette dispersion, en considérant (dans les étapes suivantes) uniquement les données de vitesses des véhicules qui proviennent de la même origine et qui ont la même destination. De plus, cette segmentation permet d'obtenir des caractéristiques pour chaque segment (chaque triplet de liaisons), par exemple l'angle de manoeuvre, le nombre de triplets ayant la même liaison centrale (nombre de connexions), etc.

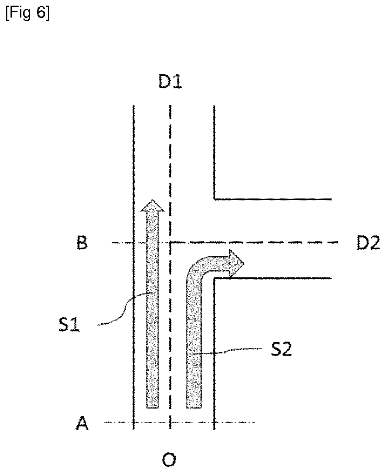

La figure 6 illustre une route comprenant une intersection. Cette route comprend une liaison comprise entre les noeuds A et B. Le véhicule a alors une seule origine O possible et deux destinations possibles D1 et D2. Ainsi, selon la mise en oeuvre de l'invention décrite ci-dessus, un premier segment correspondant à la route de la figure 4 peut être le triplet de liaisons (O, liaison AB, D1), et le deuxième segment correspondant à la route de la figure 4 peut être le triplet de liaisons (O, liaison AB, D2). La liaison centrale AB est alors commune pour deux segments (triplets de liaisons) distincts.

Alternativement, on peut segmenter la route sur la base des brins du réseau routier, ou en considérant la moitié d'un brin pour capter l'effet d'une signalisation qui peut être au milieu d'un segment défini par les données macroscopiques d'un système d'information géographique.

2.2 Catégorisation des segments du réseau routier

Lors de cette étape, on catégorise chaque segment du réseau routier d'apprentissage obtenu à l'étape 2.1 au moyen des données macroscopiques du réseau routier d'apprentissage. En d'autres termes, à chaque segment routier, on associe une catégorie qui regroupe les segments routiers ayant les mêmes caractéristiques.

Pour le mode de réalisation dans lequel le segment est un triplet de liaisons, on peut noter que deux triplets de liaisons ayant la même liaison centrale peuvent se retrouver dans des catégories différentes. En effet, ils peuvent avoir des caractéristiques différentes. Pour l'exemple de la figure 6, le triplet de liaisons (O, AB, D1) ne possède pas de virage, au contraire du triplet de liaisons (O, AB, D2).

Selon un mode de réalisation, les catégories peuvent être formées à partir des critères suivants : route congestionnée ou non, présence ou absence de signalisation (par exemple d'un feu de signalisation), présence ou absence d'une intersection, route prioritaire ou non, importance de la courbure d'un virage, classe fonctionnelle (qui caractérise la hiérarchie du réseau routier et le niveau d'important du segment, par exemple autoroute, petite rue, etc.), nombre de voies, etc. Ces critères sont obtenus directement des données macroscopiques du réseau routier.

De manière avantageuse, pour limiter le nombre de catégories et pour conserver une bonne représentativité du réseau routier, les catégories de segments peuvent être :

- une route congestionnée,
- une route pas ou peu congestionnée avec un feu de signalisation,
- une route pas ou peu congestionnée sans feu de signalisation et avec une intersection avec priorité,
- une route pas ou peu congestionnée sans feu de signalisation et avec une intersection sans priorité,
- une route pas ou peu congestionnée sans feu de signalisation avec un virage ayant une faible courbure, et
- une route pas ou peu congestionnée sans feu de signalisation avec un virage ayant une forte courbure.

En d'autres termes, pour cette réalisation, à chaque segment on peut attribuer une de ces six catégories. En effet, il n'est généralement pas utile de subdiviser le cas de la route congestionnée, car dans ce cas, la vitesse est très faible, et ni la signalisation ni la courbure de la route n'ont un impact significatif sur la vitesse du véhicule.

2.3 Classification des données de trajets réalisés

Lors de cette étape, pour chaque catégorie de segment du réseau routier d'apprentissage, on classifie les données des trajets réalisés. Pour cela, on associe à chaque segment du réseau routier d'apprentissage les données de trajets réalisés, en particulier la vitesse. Puis, on classifie pour chaque catégorie les données des trajets réalisés qui se ressemblent. Cette étape permet de limiter les dispersions des données mesurées, en particulier de la vitesse, ces dispersions étant notamment induites par des phénomènes aléatoires (style de conduite, alternance des feux de signalisation, etc.).

Cette classification peut être réalisée à partir de données (descripteurs) telles que la vitesse moyenne sur le segment, la vitesse du 75% percentile, vitesse minimale/maximale, somme des accélérations positive/négative, etc.

Selon une caractéristique de l'invention, on peut réaliser la classification par un algorithme du « k-means », car les données utilisées sont numériques. Le nombre de classes « k » (ou classes de profils de vitesse similaires) est un paramètre de l'algorithme, qui est déterminé avec une méthode itérative visant à maximiser une métrique de dissimilitude comme la « silhouette ». Un avantage important de cette méthode est l'évaluation de la proximité d'un échantillon de données (dans ce cas un profil de vitesse issue des données de trajets réalisés) au centre d'une classification en le comparant aussi avec la distance moyenne minimale d'une autre classe. En général, une valeur de silhouette supérieure à 0,5 indique une bonne classification, avec très peu de confusion et dispersion entre les classes.

A ce stade, selon la répartition des données de trajets réalisés dans les différentes classes, il est possible d'estimer une proportion de données entre classes et associer cela à une probabilité qu'un profil de vitesse d'une classification se vérifie (par exemple, on peut déterminer la probabilité de s'arrêter à un feu rouge).

2.4 Génération d'au moins un profil de vitesse.

Lors de cette étape, pour chaque catégorie de segment routier (étape 2.2) et pour chaque classification obtenue à l'étape précédente, on génère au moins un profil de vitesse au moyen des données des trajets antérieurs. En effet, on apprend à générer et/ou à regrouper les données qui appartiennent à la même catégorie et classe pour ressortir des tendances et des comportements de vitesse. Ainsi pour chaque liaison qui a été parcourue au moins une fois, on génère un profil de vitesse sur cette liaison qui approxime les données des trajets réalisés sur cette liaison. Le but de cette étape est de représenter par un profil de vitesse le comportement typique des véhicules en fonction des caractéristiques de la route et des trajets antérieurs réalisés. Ainsi, les profils de vitesse sont représentatifs de comportements réels. Ces profils de vitesse générés forment le modèle de vitesse du véhicule.

Selon une mise en oeuvre, on peut générer au moins un profil de vitesse au moyen d'une approche stochastique ou au moyen d'une approche déterministe. Les profils de vitesse stochastiques permettent une meilleure représentativité, alors que les profils de vitesse déterministes permettent une simplification des profils mesurés.

Pour le mode de réalisation pour lequel le segment est formé d'un triplet de liaisons, lorsque la liaison centrale appartient à deux triplets de liaisons, alors au moins deux profils de vitesse sont générés pour cette liaison centrale.

Avantageusement, cette étape peut consister à générer une fonction de la vitesse dépendante de la distance sur la liaison considérée. Pour cela, on peut paramétrer la fonction de la vitesse avec les données des trajets réalisés. Avantageusement, la fonction de la vitesse peut être une fonction polynomiale. De préférence (par simplification), la fonction de la vitesse peut être une fonction linéaire, une fonction parabolique, ou une combinaison de fonctions linéaires et/ou paraboliques.

Selon un mode de réalisation de l'invention, lors de cette étape on peut également attribuer à chaque catégorie de segment du réseau routier une distribution des profils de vitesse. Ainsi, il est possible de prédire une probabilité du profil de vitesse.

Conformément à un mode de réalisation de l'invention, on peut générer au moins un profil de vitesse du véhicule par une méthode de réseau de neurones, une méthode de machines à vecteur de support (de l'anglais « Support Vector Machine »), une méthode de forêts d'arbres décisionnels (de l'anglais « Random Forest »), ou d'autres méthodes d'apprentissage supervisé. La méthode réseau de neurones permet de paramétrer une fonction de la vitesse qui dépend de la distance, cette fonction pouvant être une fonction linéaire, une fonction parabolique, ou une combinaison de fonctions linéaires et/ou paraboliques. Un exemple de ce mode de réalisation est détaillé dans la suite de la description.

Afin de correctement estimer et reconstruire un profil de vitesse typique, il est utile d'en estimer certains paramètres. En particulier, ces paramètres utiles pour la génération de profil de vitesse peuvent être les vitesses initiale et finale du profil sur le segment considéré, ainsi que sa vitesse maximale/minimale et la position de l'éventuel point d'arrêt. L'apprentissage de ces paramètres peut être réalisé de façon supervisée (grâce aux données de trajets réalisés) afin de les corréler directement à des descripteurs macroscopiques. L'outil d'apprentissage supervisé utilisé peut être un réseau de neurones, qui peut utiliser en entrée les descripteurs macroscopiques suivants : classification (issue de l'étape précédente) d'appartenance du profil de vitesse à estimer, classe fonctionnelle des liaisons du triplet, nombre de voies sur les liaisons du triplet, limitation de vitesse sur les liaisons du triplet, vitesse moyenne du trafic sur les liaisons du triplet, longueur des liaisons du triplet, angle de manoeuvre en entrée et sortie de la liaison centrale du triplet, nombre de liaisons entrants/sortants de la liaison centrale, etc. Afin d'améliorer la performance de l'apprentissage et de l'estimation des paramètres du profil de vitesse, la méthode peut être séparée en deux temps avec des réseaux de neurones en cascade :

- le premier réseau de neurones peut estimer la moyenne de la vitesse initiale et de la vitesse finale, ainsi que leur écart type, pour obtenir une densité de probabilité gaussienne. La densité de probabilité gaussienne a été choisie pour la simplicité de définition avec peu de variables et pour la bonne représentativité du phénomène. Ce premier réseau de neurones peut être commun à toutes les classes déterminées à l'étape précédente.

- Les réseaux de neurones qui suivent peuvent estimer la vitesse maximale et minimale ainsi que la position du point d'arrêt. Ce réseau de neurones dépend de la classe d'appartenance du profil à estimer (par exemple un réseau de neurones qui estime le point d'arrêt est utilisé si la classe prévoit un profil avec un point d'arrêt) et prend en entrée l'estimation de la vitesse initiale et de la vitesse finale effectuée par le réseau de neurones précédent.

En ce qui concerne la génération de profils de vitesse typiques, il est possible d'utiliser les paramètres estimés avec des méthodes polynomiales déterministes, probabilistes, ou autres. Dans cette réalisation de l'invention, la méthode polynomiale peut être utilisée, sans perte de généralité. Les fonctions polynomiales utilisées pour générer les profils de vitesse prédits peuvent être inspirées de l'observation des profils réels des données de trajets réalisés de chaque classe. Il peut s'agir essentiellement de profils reconstruits avec des fonctions linéaires ou paraboliques. Les paramètres identifiés peuvent être « tirés » de façon aléatoire selon leur distribution gaussienne afin de générer plusieurs profils de vitesse représentatifs. Ces profils de vitesse générés peuvent respecter les contraintes de longueur et vitesse maximale et minimale de la liaison considérée pour laquelle la prédiction est faite.

## 3) Acquisition d'un trajet

Lors de cette étape, on acquiert un trajet au sein du réseau routier considéré reliant le point de départ et le point d'arrivée. Le trajet ainsi acquis est formé par une succession de brins routiers du réseau routier considéré, cette succession de brins routiers devant être parcourus dans l'ordre de la succession pour réaliser le déplacement entre le point de départ et le point d'arrivée.

Conformément à une mise en oeuvre de l'invention, on peut acquérir le trajet au moyen d'un algorithme de plus court chemin. Par exemple, un tel algorithme peut trouver le chemin le plus optimal, en termes de temps de parcours, ou en termes de distance, ou en termes de consommation énergétique, ou en termes de quantité de polluants émis, etc., ou toute combinaison de ces critères. Plusieurs systèmes d'information géographique SIG (Here Maps™, Google Maps™, OpenStreetMap™, etc.) proposent des algorithmes de plus court chemin rapides et efficaces.

En variante, le cas échéant, on peut acquérir un chemin qui correspond à un trajet réalisé.

Selon un aspect de l'invention, l'acquisition du trajet peut tenir compte du moment du trajet : date, jour, heure, etc. Ainsi, il est possible de prendre en compte les variations temporelles du trafic, qui dépendent notamment du moment de la journée, du jour de la semaine, de la semaine, etc. De préférence, l'acquisition du trajet peut prendre en compte l'instant du départ (l'instant étant défini notamment par le jour et l'heure du départ au point de départ) et/ou l'instant d'arrivée (cet instant étant notamment défini par le jour et l'heure d'arrivée au point d'arrivée).

## 4) Détermination d'un premier profil de vitesse

Lors de cette étape, on détermine un premier profil de vitesse pour le trajet acquis à l'étape 3 au moyen du modèle de vitesse construit à l'étape 2. Il s'agit d'un profil de vitesse complet pour le trajet acquis depuis le point de départ jusqu'au point d'arrivée au sein du réseau routier considéré. On parle d'un premier profil de vitesse, car dans l'étape suivante 5 d'optimisation cette étape peut être réitérée.

Lors de cette étape, pour chaque brin routier dudit trajet acquis, on détermine un profil de vitesse au moyen du modèle de vitesse du véhicule, et de données macroscopiques du brin routier. Pour chaque brin routier, la détermination du profil de vitesse prend en compte une vitesse initiale du véhicule (donc la vitesse initiale du profil de vitesse) qui correspond à la vitesse finale du véhicule (donc la vitesse finale du profil de vitesse) du brin routier précédent dans la succession de brins routiers qui forme le trajet. En d'autres termes, pour le brin routier K du trajet acquis, la vitesse initiale du véhicule vaut la vitesse finale du brin routier K-1 du trajet acquis. Grâce à la prise en compte de la continuité des vitesses, on peut déterminer de manière précise un profil de vitesse pour un trajet complet.

En outre, le profil de vitesse d'un brin routier peut provenir d'un tirage aléatoire parmi la distribution des profils de vitesse déterminée à l'étape 2.4.

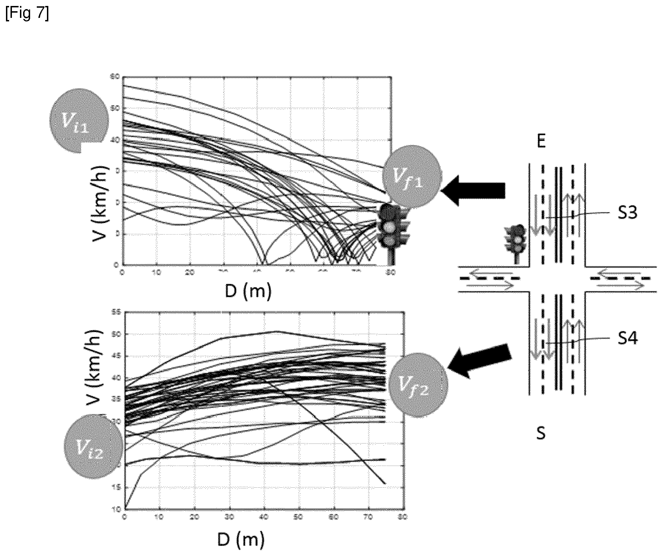

La figure 7 illustre schématiquement et de manière non limitative, une portion de réseau routier sur la droite. La portion de réseau routier est un carrefour à quatre voies avec un feu de signalisation. Pour cette illustration, on considère un trajet depuis un point de départ E vers un point d'arrivée S. Le déplacement se compose donc du parcours consécutif des brins routiers S3 et S4. Sur la partie gauche de la figure, on représente différents profils de vitesse pour chaque brin routier. Dans la partie supérieure de la figure, il s'agit de profils de vitesse du brin routier S3, et dans la partie inférieure de la figure, il s'agit de profils de vitesse du brin routier S4. Sur cette figure, les profils de vitesse varient d'une vitesse initiale $V_i$ (notés $V_i1$ pour le brin S3 et $V_i2$ pour le brin S4) vers une vitesse finale $V_f$ (notés $V_f1$ pour le brin S3 et $V_f2$ pour le brin S4). Chaque profil de vitesse de chaque brin routier a une vitesse initiale et une vitesse finale différente. Cette étape du procédé selon l'invention impose par conséquent que $V_{f1}=V_{i2}$.

De manière avantageuse, on peut déterminer une pluralité de profils de vitesse pour chaque brin routier du trajet acquis. Ainsi, il est possible de déterminer plusieurs comportements et plusieurs styles de conduites pour chaque liaison de la portion du réseau routier. La pluralité de profils de vitesse peut être obtenue de différentes manières, notamment en fonction des modes de réalisation mis en oeuvre. La pluralité de profils de vitesse pour chaque liaison peut provenir du fait que pour chaque catégorie de segment routier on génère (étape 2.4) une pluralité de profils de vitesses, chaque profil de vitesse correspondant à un comportement ou un style de conduite. De plus, la pluralité de profils de vitesse pour chaque liaison peut provenir du fait que chaque liaison peut appartenir à plusieurs triplets de liaison, les triplets de liaison pouvant appartenir à des catégories distinctes. En outre, la pluralité de profils de vitesse peut provenir d'une pluralité de tirages aléatoires parmi la distribution des profils de vitesse déterminée.

Selon un mode de réalisation de l'invention, la prédiction des profils de vitesse peut mettre en oeuvre les étapes suivantes :

4.1 Segmentation d'une portion de réseau routier

4.2 Catégorisation de la portion de réseau routier

4.3 Attribution d'au moins un profil de vitesse

Ces étapes peuvent être mises en oeuvre par des moyens informatiques. Ces étapes sont détaillées dans la suite de la description.

La figure 5 illustre, schématiquement et de manière non limitative, les étapes de ce mode de réalisation. Les brins routiers (BRI) du trajet acquis sont segmentés (SEG). Ensuite, on réalise une catégorisation (CAT) des segments obtenus à l'étape précédente. Enfin, au moyen du modèle de vitesse du véhicule (MOD) et de la catégorisation (CAT), on attribue (ATT) à chaque brin routier du trajet acquis au moins un profil de vitesse (v).

4.1 Segmentation de la portion de réseau routier

Lors de cette étape, on segmente une portion de réseau routier considéré, qui correspond aux brins routiers du trajet acquis entre le point de départ et le point d'arrivée. De préférence, on peut segmenter la portion de réseau routier considérée de la même manière que la segmentation mise en oeuvre à l'étape 2.1. Ainsi, préférentiellement, on peut segmenter la portion de réseau routier considérée par des triplets de liaisons, comportant une origine, une liaison centrale et une destination.

4.2 Catégorisation de la portion de réseau routier

Lors de cette étape, on catégorise les segments de la portion de réseau routier considérée. De préférence, on peut catégoriser les segments de la portion de réseau routier considérée de la même manière que la catégorisation prévue à l'étape 2.2. Ainsi, préférentiellement, on peut catégoriser les segments de la portion de réseau routier considérée dans les six catégories suivantes :

- une route congestionnée,
- une route pas ou peu congestionnée avec un feu de signalisation,
- une route pas ou peu congestionnée sans feu de signalisation et avec une intersection avec priorité,
- une route pas ou peu congestionnée sans feu de signalisation et avec une intersection sans priorité,
- une route pas ou peu congestionnée sans feu de signalisation avec un virage ayant une faible courbure, et
- une route pas ou peu congestionnée sans feu de signalisation avec un virage ayant une forte courbure.

4.3 Attribution d'au moins un profil de vitesse

Lors de cette étape, on attribue à chaque segment de la portion de réseau routier considérée au moins un profil de vitesse généré au moyen du modèle de vitesse du véhicule, en fonction de la catégorisation de la portion de réseau routier. En d'autres termes, le segment de la portion de réseau routier considérée a un profil de vitesse identique au profil de vitesse du segment ayant la même catégorie dans le modèle de vitesse de véhicule.

De plus, on peut attribuer également à chaque segment de ladite portion dudit réseau routier une distribution dudit au moins un profil de vitesse

Pour chaque trajectoire et pour chaque segment de la route, une classe est tirée aléatoirement selon la distribution de la catégorie du segment routier. Ensuite, un profil de vitesse est construit soit aléatoirement avec des approches stochastiques soit avec des fonctions paramétriques.

L'approche stochastique peut se baser sur l'utilisation de densités de probabilité multidimensionnelles (DSP) pour la construction du profil de vitesse. L'idée est d'estimer récursivement l'accélération au pas suivant à partir de certaines variables calculées au pas précédent selon l'équation :

$$a_{k+1} \sim P(a_{k+1}|a_k, v_k, \delta_k, p_k)$$

Avec k le pas de temps de parcours du brin routier considéré, $a_k$ accélération au pas k, $v_k$ vitesse au pas k, $\delta_k$ différence entre la vitesse au pas k et la vitesse à la fin du brin, $p_k$ la position relative normalisée, au pas k entre [0,1], où 1 représente la fin du brin, $P(b|c)$ désigne la probabilité conditionnelle de b sachant c.

Chaque variable est mise à jour au pas k, l'accélération est ensuite calculée au pas suivant k+1 selon la densité de probabilité multidimensionnelle, et cette procédure est répétée jusqu'à la fin du segment routier. Ces densités de probabilité peuvent être déterminées à partir des données de trajets réalisés sur le réseau routier d'apprentissage.

Une fois qu'un profil de vitesse est attribué pour chaque brin routier du trajet acquis, on construit un premier profil de vitesse du déplacement par agrégation des profils de vitesse de véhicule de chaque brin routier dudit trajet acquis. En d'autres termes, le premier profil de vitesse du déplacement est composé de l'ensemble des profils de vitesse des brins routiers du trajet acquis.

5) Détermination d'un profil de vitesse optimal

Lors de cette étape, on détermine un profil de vitesse optimal pour le déplacement du véhicule entre le point de départ et le point d'arrivée au sein du réseau routier. Lors de cette étape, on optimise le profil de vitesse obtenu à l'étape 4 pour le trajet acquis. Pour cette étape, on met en oeuvre les étapes suivantes :

- on identifie une contrainte physique du trajet,
- si la contrainte physique du trajet est respectée pour le premier profil de vitesse, alors le profil de vitesse optimal est le premier profil de vitesse, et
- sinon, si la contrainte physique du trajet n'est pas respectée, on réitère l'étape 4, en attribuant un profil de vitesse différent pour au moins un brin routier du trajet acquis, cette réitération de l'étape 4 est mise en oeuvre jusqu'à ce que la contrainte physique soit respectée.

En d'autres termes, à chaque itération on modifie au moins un profil de vitesse pour un brin routier. De préférence, à chaque itération, on peut attribuer un profil de vitesse différent pour chaque brin routier du trajet acquis. Par exemple, lorsqu'on utilise une approche déterministe et des fonctions paramétriques pour l'attribution d'un profil de vitesse à un brin routier, on peut faire évoluer au moins un paramètre de la fonction paramétrique pour modifier le profil de vitesse du brin routier lors de la réitération. Selon un autre exemple, lorsqu'on utilise une approche stochastique pour l'attribution d'un profil de vitesse à un brin routier, on peut réaliser un autre tirage de profil de vitesse lors de la réitération.

Conformément à une mise en oeuvre, la contrainte physique peut être une contrainte temporelle d'un instant d'arrivée dudit trajet (en d'autres termes le temps de trajet), et/ou une contrainte de vitesse du véhicule d'au moins une position du trajet. La contrainte temporelle et/ou la contrainte de vitesse peut être notamment obtenue par un algorithme de plus court chemin (par exemple, celui mis en oeuvre à l'étape 3) et/ou par des données de trajets réalisés qui ont le même point de départ et le même point d'arrivée. En outre, la contrainte physique peut tenir compte du moment du trajet : date, jour, heure, etc. Ainsi, il est possible de prendre en compte les variations temporelles du trafic, qui dépend notamment du moment de la journée, du jour de la semaine, de la semaine considérée dans l'année, etc. De préférence, la contrainte physique peut être le temps de parcours déterminé par un algorithme de plus court chemin.

A chaque itération, l'idée est de minimiser la différence entre le trajet acquis et la contrainte physique.

Pour le mode de réalisation, pour lequel la contrainte physique est le temps de trajet, on peut définir le problème d'optimisation suivant :

$$\min_{U}(|T_{imp} - T_{model}(U)|)$$

$$U = \begin{cases} \vec{v_t} \\ \vec{P_c} \\ \vec{T_s} \end{cases}$$

Avec $v_t$ le vecteur de vitesse du trafic sur chaque segment de la route, $P_c$ le vecteur de choix des classes (congestionnée, fluide, etc.) sur chaque segment de la route, $T_s$ le vecteur de temps d'arrêt sur chaque segment de la route (égale à 0 en cas de non-arrêt), $T_{imp}$ est le temps de parcours issu de la contrainte physique obtenu soit par l'algorithme de plus court chemin soit par des données de trajets réalisés, et $T_{model}$ est le temps de parcours issu du profil de vitesse déterminé. D'une itération à l'autre, on peut notamment faire varier les niveaux de congestion et les temps d'arrêt au niveau d'au moins un brin routier afin de s'approcher du temps de parcours imposé. Ce problème peut être résolu soit avec une méthode d'optimisation adaptée soit avec un algorithme simple et itératif, par exemple au moyen d'algorithmes génétiques, ou tous algorithmes analogues. Une méthode non limitative de résolution se base sur les algorithmes génétiques qui permettent d'obtenir une solution approchée de ce problème complexe en un temps de calcul raisonnable.

Selon un mode de réalisation de l'invention, à chaque itération de la détermination du profil de vitesse du trajet, on peut déterminer un profil de vitesse d'un brin routier en construisant un profil de vitesse du brin routier au moyen d'une approche stochastique ou au moyen de fonctions paramétriques.

Le procédé peut comporter une étape facultative d'affichage du profil de vitesse pour le trajet acquis. Lors de cette étape facultative, on peut afficher le profil de vitesse sur une carte routière. Cet affichage peut prendre la forme d'une note ou d'un code couleur. Le cas échéant, une note ou une couleur peut être associée à chaque liaison du réseau routier. Cet affichage peut être réalisé à bord d'un véhicule : sur le tableau de bord, sur un dispositif portatif autonome, tel qu'un appareil de géolocalisation (de type GPS), un téléphone portable (de type téléphone intelligent). Il est également possible d'afficher le profil de vitesse sur un site internet. De plus, le profil de vitesse prédit peut être partagé avec les pouvoirs publics (par exemple gestionnaire de la voirie) et les entreprises de travaux publics. Ainsi, les pouvoirs publics et les entreprises de travaux publics peuvent optimiser l'infrastructure routière, pour en améliorer la sécurité ou les émissions polluantes.

La présente invention concerne également un procédé de prédiction d'une quantité d'au moins un polluant chimique et/ou sonore émis par un véhicule au sein d'un réseau routier lors d'un déplacement entre un point de départ et un point d'arrivée. Pour ce procédé de prédiction d'une quantité d'au moins un polluant émis, on met en oeuvre les étapes suivantes :

a) on prédit au moins un profil de vitesse de véhicule sur le trajet acquis entre le point de départ et le point d'arrivée au moyen du procédé de prédiction d'au moins un profil de vitesse selon une quelconque des variantes ou des combinaisons de variantes décrites précédemment ; et
b) on applique un modèle microscopique d'émissions polluantes, chimiques et/ou sonores, au profil de vitesse prédit pour prédire une quantité d'au moins un polluant chimique et/ou sonore émis sur le trajet acquis, le modèle d'émissions polluantes étant un modèle qui relie la vitesse du véhicule à une quantité de polluants chimiques et/ou sonores émis par le véhicule.

Ainsi, il est possible de déterminer les émissions polluantes chimiques et/ou sonores à l'échelle d'un déplacement, même dans le cas où aucune donnée de trajet réalisé n'est disponible pour ce quartier ou cette ville.

Ces étapes peuvent être mises en oeuvre par des moyens informatiques.

De manière avantageuse, le procédé peut comporter une étape facultative d'affichage des quantités des polluants chimiques et/ou sonores émis par le véhicule pour un déplacement entre le point de départ et le point d'arrivée. Lors de cette étape facultative, on peut afficher les quantités de polluants émis sur une carte routière. Cet affichage peut prendre la forme d'une note ou d'un code couleur. Le cas échéant, une note ou une couleur peut être associée à chaque liaison du réseau routier. Cet affichage peut être réalisé à bord d'un véhicule : sur le tableau de bord, sur un dispositif portatif autonome, tel qu'un appareil de géolocalisation (de type GPS), un téléphone portable (de type téléphone intelligent). Il est également possible d'afficher les émissions polluantes sur un site internet. De plus, les émissions polluantes prédites peuvent être partagées avec les pouvoirs publics (par exemple gestionnaire de la voirie) et les entreprises de travaux publics. Ainsi, les pouvoirs publics et les entreprises de travaux publics peuvent optimiser l'infrastructure routière, pour en améliorer les émissions polluantes.

De plus, la présente invention concerne un procédé de prédiction de la consommation énergétique (par exemple consommation de carburant ou consommation d'énergie électrique) d'un véhicule, pour un déplacement entre un point de départ et un point d'arrivée au sein d'un réseau routier. Pour ce procédé de prédiction de la consommation d'un véhicule, on met en oeuvre les étapes suivantes :

a) on prédit au moins un profil de vitesse de véhicule pour un déplacement entre le point de départ et le point d'arrivée au moyen du procédé de prédiction d'au moins un profil de vitesse selon une quelconque des variantes ou des combinaisons de variantes décrites précédemment ; et
b) on applique un modèle de consommation du véhicule, au profil de vitesse prédit pour prédire la consommation du véhicule pour le déplacement entre le point de départ et le point d'arrivée, le modèle de consommation du véhicule étant un modèle qui relie la vitesse du véhicule à sa consommation.

Ainsi, il est possible de déterminer la consommation de véhicule à l'échelle d'un déplacement entre un point de départ et un point d'arrivée, même dans le cas où aucune donnée de trajet réalisé n'est disponible pour ce réseau routier.

Ces étapes peuvent être mises en oeuvre par des moyens informatiques.

De manière avantageuse, le procédé peut comporter une étape facultative d'affichage de la consommation pour un déplacement entre le point de départ et le point d'arrivée. Lors de cette étape facultative, on peut afficher la consommation sur une carte routière. Cet affichage peut prendre la forme d'une note ou d'un code couleur. Le cas échéant, une note ou une couleur peut être associée à chaque liaison du réseau routier. Cet affichage peut être réalisé à bord d'un véhicule : sur le tableau de bord, sur un dispositif portatif autonome, tel qu'un appareil de géolocalisation (de type GPS), un téléphone portable (de type téléphone intelligent). Il est également possible d'afficher la consommation du véhicule sur un site internet. De plus, la consommation du véhicule peut être partagée avec les pouvoirs publics (par exemple gestionnaire de la voirie) et les entreprises de travaux publics. Ainsi, les pouvoirs publics et les entreprises de travaux publics peuvent optimiser l'infrastructure routière, l'emplacement des stations-services, des bornes de recharge, etc.

## Exemples

Les caractéristiques et avantages du procédé selon l'invention apparaîtront plus clairement à la lecture des exemples d'application ci-après.

Pour le premier exemple, on compare une approche déterministe et une approche stochastique pour générer des profils de vitesse pour un brin d'un réseau routier. Il s'agit d'un brin de routier, avec un feu de signalisation. Pour le brin routier, on dispose de mesures de la vitesse lors d'un déplacement. De plus, on applique le modèle obtenu par les étapes 1 et 2 du procédé selon l'invention pour prédire un profil de vitesse pour ce brin routier.

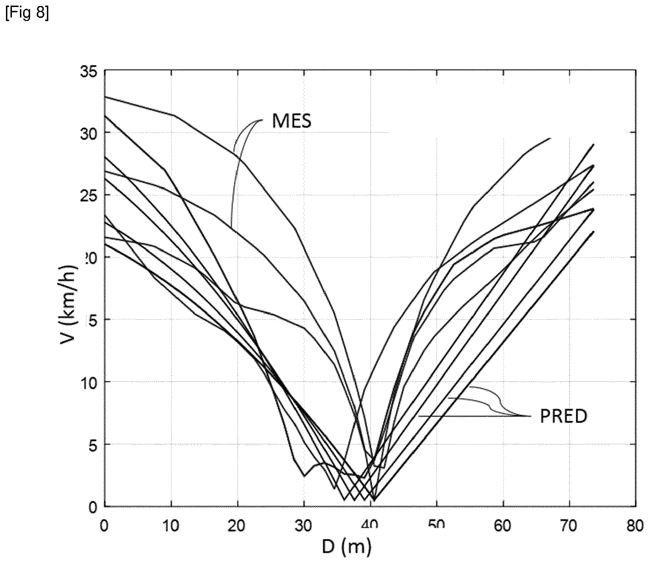

Dans un premier temps, on génère des profils de vitesse au moyen d'une approche déterministe au moyen de fonctions paramétriques linéaires. La figure 8 illustre des profils de vitesse V mesurés MES et prédites PRED (au moyen du modèle obtenu à l'étape 2) en km/h en fonction de la distance D en m par rapport à une extrémité du brin routier. On remarque pour cet exemple, que les profils de vitesse prédits ont une allure similaire aux profils de vitesse mesurés, en ayant toutefois des formes très linéaires, qui ne permettent pas de reproduire les niveaux d'accélération des vitesses mesurées.

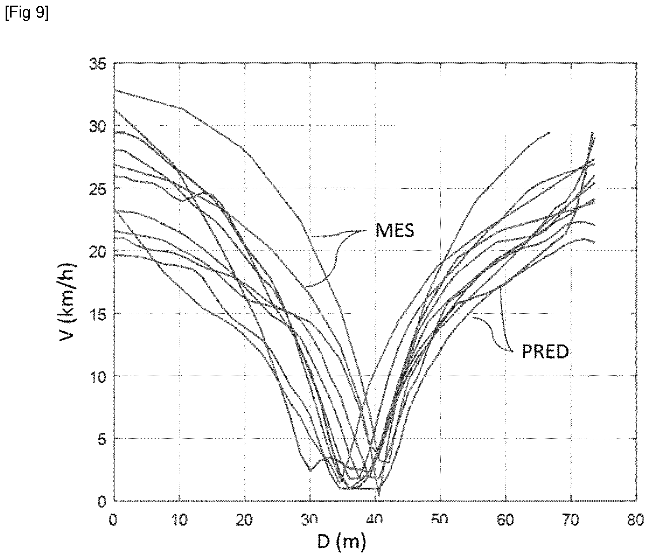

Dans un deuxième temps, on génère des profils de vitesse au moyen d'une approche stochastique. La figure 9 illustre des profils de vitesse V mesurés MES et prédites PRED (au moyen du modèle obtenu à l'étape 2) en km/h en fonction de la distance D en m par rapport à une extrémité du brin routier. On remarque pour cet exemple, que les profils de vitesse prédits ont une allure similaire aux profils de vitesse mesurés, et arrivent bien à reproduire la complexité et la variabilité des profils de vitesse mesurés. De plus, sur ces exemples, l'erreur moyenne absolue entre les profils de vitesse prédits et les profils de vitesse mesurés est réduite de 35% par rapport à l'approche déterministe.

Pour le deuxième exemple, on prédit un profil de vitesse d'un véhicule automobile pour un déplacement entre un point de départ et un point d'arrivée au sein d'un réseau routier. Sur cet exemple, une route urbaine (intersection, signalisation etc..) a été considérée avec une variation de la vitesse du trafic entre 25km/h et 40km/h. Pour cet exemple, on a obtenu des données de trajets réalisés entre ce point de départ et ce point d'arrivée, avec notamment une mesure de la vitesse lors de ce déplacement. Pour ce trajet, on applique le procédé selon l'invention pour déterminer un profil de vitesse pour le déplacement, de telle sorte que la durée du trajet (contrainte physique) soit identique à la durée du trajet réalisé. On a appliqué le procédé selon l'invention à deux instants : à 9h et à 14h.

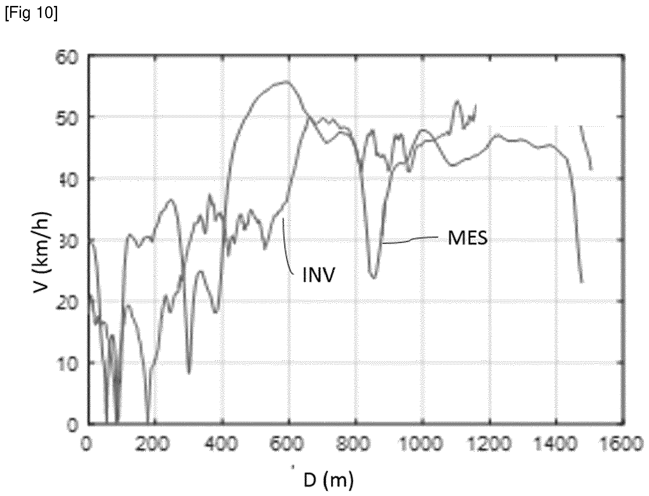

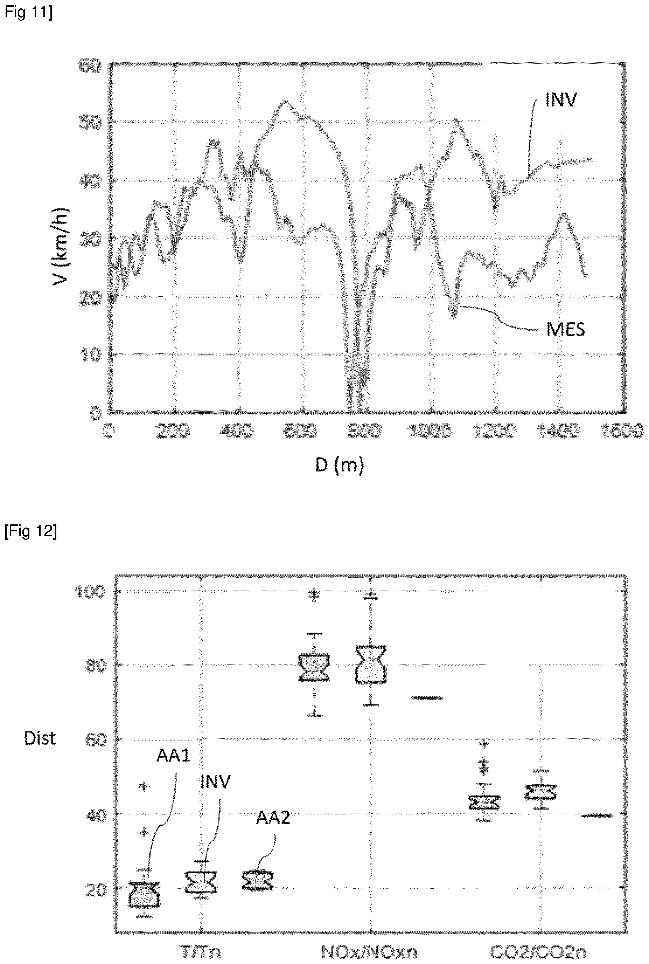

Les figures 10 et 11 illustrent le profil de vitesse V en km/h en fonction de la distance D en m par rapport au point de départ du trajet. La figure 10 correspond à un trajet réalisé à 9h, et la figure 11 correspond à un trajet réalisé à 14h. Le profil de vitesse mesuré est noté MES, et le profil de vitesse obtenu par le procédé selon l'invention est noté INV. Qualitativement, les profils générés par le procédé selon l'invention arrivent à reproduire les dynamiques (niveaux d'accélérations) et la variabilité des trajectoires mesurées. Quasiment les mêmes endroits d'arrêt sont aussi reproduits. Quantitativement, les trajectoires générées arrivent à reproduire le même niveau de temps de parcours. Cela est assuré grâce à l'étape 5 du procédé selon l'invention.

Afin d'évaluer la représentativité des trajectoires générées, une comparaison a aussi été réalisée en termes d'émissions de NOx (pour un type de véhicule choisi) et de $CO_2$ avec les émissions associées aux profils de vitesse réels mesurés. Pour ce faire, les profils de vitesse mesurés et prédits sont pris en entrée d'un même modèle microscopique d'émissions, par exemple au moyen d'un modèle tel que décrit dans la demande de brevet FR3049653 (WO 2017/174239). Les deux sont ensuite comparés à un modèle d'émission issue de l'état de l'art. Il s'agit du modèle d'émission macroscopique COPERT qui estime les émissions avec des facteurs d'émission pour chaque niveau de vitesse moyenne.

Les résultats de la comparaison sont présentés dans la Figure 12. Les comparaisons sont faites en terme du temps de parcours T, d'émissions NOx et d'émissions $CO_2$. Les résultats sont présentés avec des distributions Dist sous forme de boites à moustaches (de l'anglais « boxplot »). Une normalisation a été faite des différentes variables afin de les mettre dans la même figure. Cette figure illustre pour chacun des cas le temps de parcours normalisé T/Tn, la distribution des émissions de Nox normalisée Nox/Noxn et la distribution des émissions de $CO_2$ normalisée CO2/CO2n pour l'application du modèle microscopique au profil de vitesse mesuré AA1, pour l'application du modèle microscopique au profil de vitesse prédit selon l'invention INV, et au moyen de la méthode COPERT selon l'art antérieur AA2.

Globalement, les niveaux d'erreur sont faibles pour le modèle selon l'invention avec des erreurs inférieures à 12%. Cette faible erreur provient notamment de la boucle fermée dans l'étape 5 qui permet de converger vers les temps de parcours imposés.

Pour les émissions NOx et $CO_2$, le modèle selon l'invention arrive à reproduire globalement le même niveau de variabilité des émissions qui est spécifique à différentes heures de la journée. Pour les deux estimations et en se comparant aux émissions calculées à partir des mesures, l'erreur relative est inférieure à 6%. Cela n'est toutefois pas le cas avec le modèle macroscopique COPERT de l'art antérieur où les erreurs sont doublées. Aussi, le modèle macroscopique COPERT n'arrive pas à ressortir un certain niveau de variabilité des estimations vu qu'il est à base d'un modèle moyen de facteur d'émission.

Ainsi, le procédé selon l'invention permet de déterminer un profil de vitesse qui permet une estimation précise de la quantité de polluants émis par un véhicule.

## Revendications

**1.** Procédé de prédiction d'au moins un profil de vitesse d'un véhicule pour un déplacement au sein d'un réseau routier entre un point de départ et un point d'arrivée (O/D), ledit profil de vitesse étant une variation de la vitesse dudit véhicule le long dudit déplacement, **caractérisé en ce qu'**on met en oeuvre les étapes suivantes :

> a. On construit une base d'apprentissage à partir de données macroscopiques d'un réseau routier d'apprentissage (MACa), et de données de trajets réalisés (DTRa) sur ledit réseau routier d'apprentissage ;
> b. On construit un modèle de vitesse de véhicule (MOD) au moyen d'une méthode d'apprentissage automatique (APP) entraînée sur ladite base d'apprentissage construite, ledit modèle de vitesse de véhicule associe à un brin dudit réseau routier une pluralité de profils de vitesse du véhicule en fonction desdites données macroscopiques dudit brin routier ;
> c. On acquiert un trajet (CHE) reliant ledit point de départ et ledit point d'arrivée (O/D), ledit trajet étant formé d'une succession de brins routier dudit réseau routier considéré ;
> d. Pour chaque brin routier dudit trajet acquis (CHE), on détermine un profil de vitesse (v) au moyen dudit modèle de vitesse de véhicule, et de données macroscopiques (MACb) dudit brin routier en imposant que la vitesse initiale de véhicule d'un brin routier corresponde à la vitesse finale dudit brin routier précédent dans ladite succession des brins routiers du trajet acquis (CHE), et on construit un premier profil de vitesse dudit déplacement par agrégation des profils de vitesse de véhicule de chaque brin routier dudit trajet acquis ; et
> e. On identifie au moins une contrainte physique dudit trajet acquis, et tant que ladite contrainte physique dudit trajet acquis n'est pas respectée, on réitère l'étape précédente en générant un nouveau profil de vitesse de véhicule pour au moins un brin routier dudit trajet acquis, afin de générer un profil optimal de vitesse d'un véhicule ($v_{opt}$) pour ledit déplacement entre ledit point de départ et ledit point d'arrivée (O/D).

2. Procédé de prédiction d'au moins un profil de vitesse selon la revendication 1, dans lequel ladite contrainte physique est une contrainte temporelle d'un instant d'arrivée dudit trajet, et/ou une contrainte de vitesse du véhicule d'au moins une position dudit trajet, ladite contrainte temporelle et/ou ladite contrainte de vitesse étant notamment obtenue par un algorithme de plus court chemin et/ou par des données de trajet réalisé (DTRb), de préférence ladite contrainte physique est déterminée en fonction d'un instant de départ.

3. Procédé de prédiction d'au moins un profil de vitesse selon l'une des revendications précédentes, dans lequel on construit ledit modèle de vitesse de véhicule en mettant en oeuvre les étapes suivantes :

> v) On segmente (SEG) ledit réseau routier d'apprentissage au moyen desdites données macroscopiques dudit réseau routier (MAC) ;
> vi) On catégorise (CAT) chaque segment dudit réseau routier d'apprentissage en fonction desdites données macroscopiques dudit réseau routier (MAC), notamment par un algorithme de classification, tel qu'un réseau de neurones ;
> vii) Pour chaque catégorie de segment routier, on classifie (CLA) lesdites données de trajets réalisés (DTR) ; et
> viii) Pour chaque catégorie de segment routier et pour chaque classification desdites données de trajets réalisés, on génère au moins un profil de vitesse de véhicule (PRO) au moyen desdites données de trajets réalisés (DTR).

4. Procédé de prédiction d'au moins un profil de vitesse selon la revendication 3, dans lequel on détermine au moins un profil de vitesse de véhicule sur chaque brin routier dudit trajet acquis en mettant en oeuvre les étapes suivantes :

> i. On segmente (SEG) une portion du réseau routier qui comporte chaque brin routier dudit trajet acquis ;
> ii. On catégorise (CAT) lesdits segments de ladite portion dudit réseau routier, notamment par un algorithme de classification, tel qu'un réseau de neurones ; et
> iii. On attribue (ATT) à chaque segment de ladite portion dudit réseau routier ledit au moins un profil de vitesse de véhicule généré au moyen du modèle de vitesse du véhicule (MOD).

5. Procédé de prédiction d'au moins un profil de vitesse selon la revendication 4, dans lequel on attribue (ATT) également à chaque segment de ladite portion dudit réseau routier une distribution dudit au moins un profil de vitesse.

6. Procédé de prédiction d'au moins un profil de vitesse selon l'une des revendications 3 à 5, dans lequel, à chaque itération de la détermination du profil de vitesse du trajet, on détermine un profil de vitesse d'un brin routier en construisant un profil de vitesse du brin routier au moyen d'une approche stochastique, ou au moyen d'une approche déterministe, notamment au moyen des fonctions paramétriques.

7. Procédé de prédiction d'au moins un profil de vitesse selon l'une des revendications 3 à 6, dans lequel on segmente (SEG) ledit réseau routier par une division dudit réseau routier en triplets de liaisons, chaque triplet de liaisons étant formé par un brin routier formé entre deux noeuds dudit réseau routier, son origine et sa destination.

8. Procédé de prédiction d'au moins un profil de vitesse selon l'une des revendications précédentes, dans lequel on acquiert ledit trajet (CHE) reliant ledit point de départ et ledit point d'arrivée (O/D) par un algorithme de plus court chemin, de préférence ledit algorithme de plus court chemin prend en compte en outre un instant de départ.

9. Procédé de prédiction d'au moins un profil de vitesse selon l'une des revendications précédentes, dans lequel on affiche ledit au moins un profil de vitesse du véhicule de ladite portion de réseau routier sur une carte routière, de préférence au moyen d'un téléphone intelligent ou d'un système informatique.

10. Procédé de prédiction d'une quantité d'au moins un polluant chimique et/ou sonore émis par un véhicule lors d'un déplacement au sein d'un réseau routier entre un point de départ et un point d'arrivée, **caractérisé en ce qu'**on met en oeuvre les étapes suivantes :

   a. On prédit au moins un profil de vitesse du véhicule pour ledit déplacement entre ledit point de départ et ledit point d'arrivée au moyen du procédé de détermination d'au moins un profil de vitesse selon l'une des revendications 1 à 8 ; et
   b. On applique un modèle microscopique d'émissions polluantes chimiques et/ou sonores audit au moins un profil de vitesse pour prédire une quantité d'au moins un polluant chimique et/ou sonore, ledit modèle microscopique reliant la vitesse du véhicule et la quantité d'au moins un polluant chimique et/ou sonore émis par un véhicule.

11. Procédé de prédiction d'une consommation énergétique d'un véhicule au sein d'un réseau routier lors d'un déplacement entre un point de départ et un point d'arrivée, **caractérisé en ce qu'**on met en oeuvre les étapes suivantes :

   a. On prédit au moins un profil de vitesse du véhicule pour ledit déplacement entre ledit point de départ et ledit point d'arrivée au moyen du procédé de détermination d'au moins un profil de vitesse selon l'une des revendications 1 à 8 ; et
   b. On applique un modèle de consommation énergétique du véhicule audit au moins un profil de vitesse pour prédire une consommation énergétique dudit véhicule, ledit modèle reliant la vitesse du véhicule et ladite consommation dudit véhicule.

[Fig 1]

[Fig 2]

[Fig 3]

[Fig 4]

[Fig 5]

[Fig 6]

[Fig 7]

[Fig 8]

[Fig 9]

[Fig 10]

Fig 11]

[Fig 12]

Europäisches
Patentamt

European
Patent Office

Office européen
des brevets

**RAPPORT DE RECHERCHE EUROPEENNE**

Numéro de la demande

EP 22 21 0319

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 096 822 A1 (IFP ENERGIES NOW [FR]) 4 décembre 2020 (2020-12-04) * abrégé * * alinéas [0016] – [0029], [0031], [0043] – [0049], [0052], [0121], [0124], [0168] * ----- | 1-11 | INV. G08G1/01 G06F17/00 G06F21/00 G06N3/00 G08G1/052 |
| X | EP 3 836 115 A1 (IFP ENERGIES NOW [FR]) 16 juin 2021 (2021-06-16) * abrégé * * alinéas [0019] – [0026], [0033] * ----- | 1-11 | |
| X | US 2019/102960 A1 (THIBAULT LAURENT [FR] ET AL) 4 avril 2019 (2019-04-04) * abrégé * * alinéas [0017] – [0032] * ----- | 1-11 | |

DOMAINES TECHNIQUES
RECHERCHES (IPC)

G08G
G06F
G06N

Le présent rapport a été établi pour toutes les revendications

| Lieu de la recherche | Date d'achèvement de la recherche | Examinateur |
|---|---|---|
| La Haye | 18 janvier 2023 | Berland, Joachim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 21 0319

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2023

| Document brevet cité au rapport de recherche | | Date de publication | Membre(s) de la famille de brevet(s) | | Date de publication |
|---|---|---|---|---|---|
| FR 3096822 | A1 | 04-12-2020 | EP | 4026110 A1 | 13-07-2022 |
|  |  |  | FR | 3096822 A1 | 04-12-2020 |
|  |  |  | US | 2022215749 A1 | 07-07-2022 |
|  |  |  | WO | 2020239503 A1 | 03-12-2020 |
| EP 3836115 | A1 | 16-06-2021 | CN | 113034930 A | 25-06-2021 |
|  |  |  | EP | 3836115 A1 | 16-06-2021 |
|  |  |  | FR | 3104306 A1 | 11-06-2021 |
|  |  |  | US | 2021172750 A1 | 10-06-2021 |
| US 2019102960 | A1 | 04-04-2019 | CN | 109578155 A | 05-04-2019 |
|  |  |  | EP | 3462404 A1 | 03-04-2019 |
|  |  |  | FR | 3071951 A1 | 05-04-2019 |
|  |  |  | US | 2019102960 A1 | 04-04-2019 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 109003453
- FR 3096822
- WO 2020239503 A
- FR 3049653
- WO 2017174239 A

**Littérature non-brevet citée dans la description**

- **LAMM, RUEDIGER ; BASIL PSARIANOS ; THEODOR MAILAENDER.** Highway design and traffic safety engineering handbook. 1999
- **EFFA, R. C. ; L. C. LARSEN.** Development of Real-World Driving Cycles for Estimating Facility-Specific Emissions from Light-Duty Vehicles. Presented at Air and Waste Management Assoc. Specialty Conf. Emission Inventory. *Perception and Reality,* 1993
- Modélisation fonctionnelle de profils de vitesse en lien avec l'infrastructure et méthodologie de construction d'un profil agrégé. **ANDRIEU, C.** Doctoral dissertation. Université Paul Sabatier-Toulouse III, 2013
- **LAURESHYN ; ALIAKSEI ; KALLE ÅSTRÖM ; KARIN BRUNDELL-FREIJ.** From speed profile data to analysis of behaviour: classification by pattern recognition techniques. *IATSS research,* 2009, vol. 33 (2), 88-98